# EUROPEAN PATENT SPECIFICATION

(11) **EP 2 524 366 B1**
(45) Date of publication and mention of the grant of the patent: **27.05.2015**
(21) Application number: 11708076.2
(22) Date of filing: 13.01.2011
(51) Int. Cl.: G09F 3/03, E05B 73/00, G02C 11/00, G08B 13/24

(54) **ANTI-THEFT DEVICE**
ANTIDIEBSTAHLEINRICHTUNG
DISPOSITIF ANTIVOL

(30) Priority: 15.01.2010 IT MI20100033
(43) Date of publication of application: 21.11.2012
(73) Proprietor: Plasti-Max S.p.A., 24064 Grumello Del Monte (IT)
(72) Inventor: MAZZUCCHELLI, Corrado, I-24064 Grumello Del Monte (IT)
(74) Representative: Trupiano, Federica
(86) International application number: PCT/IB2011/000042
(87) International publication number: WO 2011/086453

(56) References cited:
- EP-A1- 0 396 850
- WO-A1-96/23123
- WO-A2-2007/129189
- US-A- 5 944 173

## Description

### OBJECT OF THE INVENTION

The present invention relates to an anti - theft device, in particular it concerns an anti - theft device with a tamper-proof security hinge to hook around an extended portion of a retail object to be protected against theft, as in the case of golf clubs, eyeglasses, etc..

### KNOWN PRIOR ART

Eyeglasses, for example, are displayed to the public so that users can put on and try different models before purchasing them, even without the seller being present. To ensure that the eyeglasses are not taken away by customers, anti - theft devices fixed to the eyeglasses are used.

Anti - theft devices to be applied directly to one of the temple arm of the eyeglasses on display have long been commercially available. Said known devices generally comprise a body formed of one or more pieces, which is hooked to the eyeglass temple arm. Most recent devices are removable from the temple arm with suitable tools after the sale and can be equipped with alarm systems capable of being electronically detected enhancing the anti - theft functions of the device itself.

As mentioned earlier, the body can be formed into a single piece, or may comprise two connectable portions coupled to each other and equipped with a hinge at one end and a locking device at the other end.

In the latter case it often happens that the tampering of the device is actuated by attempting to unhinge the hinge that rotatably connects the two portions of the anti-theft device, rather than forcing the closure part itself. Said closure results in fact very difficult to open, if not through the use of a tool designed and used appropriately by those who distribute or sell eyeglasses.

In the patent application WO 2007/129189, in the name of the Applicant, is disclosed an anti - shoplifting device for eyeglasses comprising at least two rigid half - shells adapt to close upon the temple arm of the eyeglasses, at least a half - shell being provided with at least one soft insert material capable of receiving, at least in part, a portion of the temple arm surface, rotation means and means to bind together in a non-reversible way said at least two half - shells. Therefore, the rotation of a half - shell over the other during the opening of the device is achieved by a hinge that is composed of two pin elements on a first half-shell and two corresponding housings in the second half-shell in which said pins are rotatably inserted. In this case instead of forcing the closure, tampering of the device may be achieved by unhinging the hinge, i.e. forcing the two pins on the first half - shell so as to pull out them from the corresponding housings on the second half - shell.

In other embodiments according to the known art the connection between the two half - shells is made by a deformable plastic tab. As a matter of fact, since the two half - shells joined together forming one piece, they result joined at one end by a deformable portion. In this case, the tampering of the anti - theft device can be achieved by breaking the deformable tab so as to divide the two half - shells opening the device.

In both cases, the theft can be easily accomplished since the weakest part of the device is the end of the half - shells occupied by the hinge, as the closing means at the opposite end have a high breaking resistance, as also described in other patents or patent applications of the Applicant.

Therefore, the anti - theft devices mentioned above, although made up of few pieces and allowing application and removal of the device on the eyeglasses in an easy and fast way, have some disadvantages, particularly related to the possibility of being easily forced in the rotatable connecting portion, i.e. the hinge. As a matter of fact, the part of the device dedicated to the closing means is designed for not being opened without the use of a specifically designed tool. Preferably the closing means are not reversible.

### OBJECT OF THE INVENTION

For these reasons it is the object of the present invention to provide an anti theft device that is suitable to be placed on an temple arm of eyeglasses, by the producer or distributor, so that it is extremely difficult to be removed by forcing the portion of the device occupied by the hinge.

Another object of the present invention is to provide an anti - theft device for eyeglasses to be simple in shape and structurally resistant allowing for easy production and assembly.

A further object of the present invention is to provide an anti - theft device for eyeglasses with a tamper proof hinge.

### DESCRIPTION

These and other aims are achieved by this anti -theft device comprising at least two rigid half - shells, a primary one and a secondary one, which can be tightened around an elongated element of any section, for example circular or oval, and provided at one end with rotating means and with closing means at the opposite end, said rotating means comprising a tamper proof security hinge according to the present claim 1. The other aspects of the invention are described in claims 2-10.

For example said elongated element is preferably the shaft of a golf-club, the support shaft for retail items on display, the temple arm of eyeglasses, etc...

More preferably said anti - theft device is of the type suitable to be mounted on a eyeglass temper arm, comprising at least two rigid half - shells, a primary one and a secondary one, which can be tightened around a temple arm of said eyeglasses and provided at one end with rotating means and with closing means of a non-reversible type at the opposite end, said rotating means comprising a tamper proof security hinge. According to an advantageous aspect the device according to the invention has a hinge with a high resistance to unhinging.

According to another advantageous aspect the device according to the invention is made by the traditional method of molding plastic materials, with the advantage of being made for assembly with a limited number of pieces and also resulting economically advantageous.

### BRIEF DESCRIPTION OF FIGURES

Further characteristics and relative advantages of the present invention will become more clear from the following description, made by way of illustration and not limitation with reference to the accompanying drawings in which:
- Figure 1 is a perspective view of the anti - theft device according to the invention in open position;
- Figure 2 is a top view of the anti - theft device of Figure 1, showing the primary half - shell and secondary half - shell in closed position;
- Figure 3a is a top view of the primary half - shell of the anti - theft device of Figure 1;
- Figure 3b is a top view of the secondary half -shell of the anti - theft device of Figure 1;
- Figure 4 is a bottom view of the anti - theft device of Figure 1, showing the primary half - shell and the secondary half-shell in closed position;
- Figure 5 is a side view of the anti - theft device of figure 1 in closed position.

### DETAILED DESCRIPTION OF SOME PREFERRED EMBODIMENTS OF THE INVENTION

With particular reference to said figures the generic anti - theft device is indicated with 1 according to the invention.

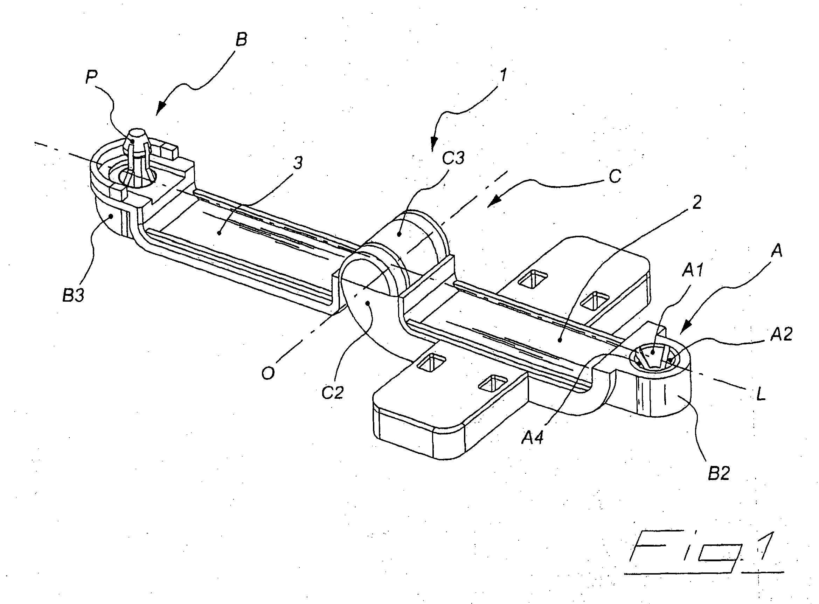

Figure 1 shows the anti - theft device 1 according to the invention comprising two rigid half - shells, a primary one 2 and a secondary one 3, connected in rotation to each other via a hinge C placed in correspondence of the ends C2 and C3, of the half - shells 2 and 3, respectively. Said hinge C allows the end C2 of the primary half - shell 2 to rotate with respect to the end C3 of the secondary half - shell 3 around an axis O orthogonal to a second axis L oriented with the longitudinal direction of the half - shells 2 and 3.

The two half - shells 2 end 3 having the ability to rotate relative to each other around said axis O, can take an open position and a closed position. In the closed position the ends B2 and B3 of the two half - shells 2 and 3 overlap and are connected in a non - reversible way by closing means B.

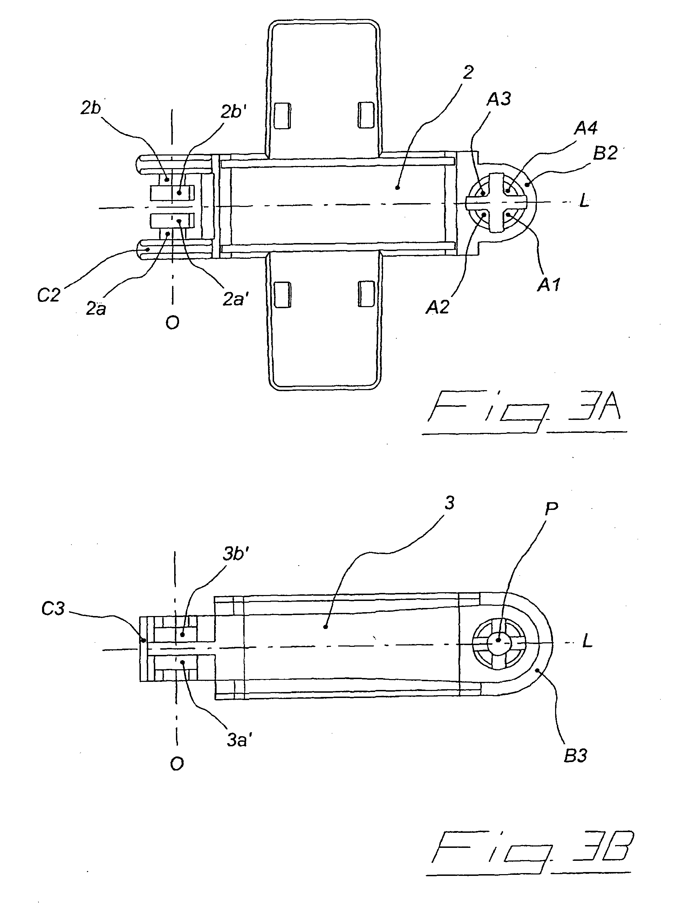

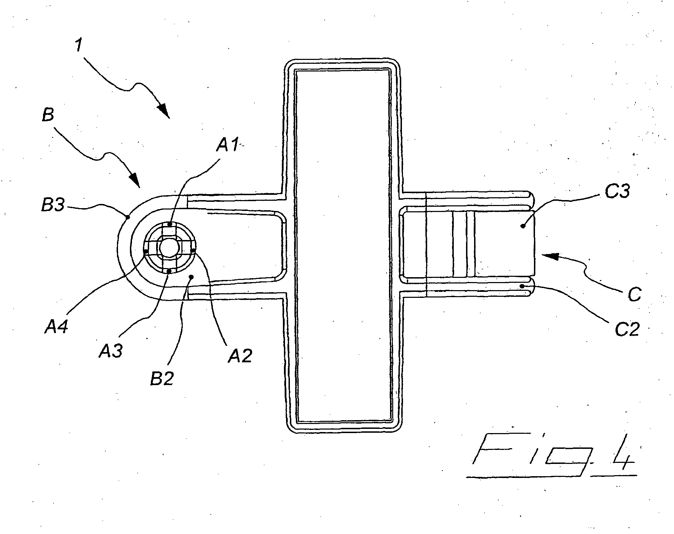

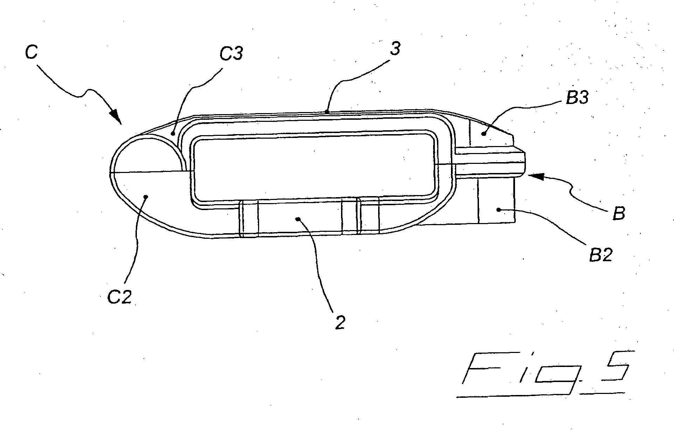

The anti - theft device includes in fact, at the opposite end of the hinge C, closing means B to block each other in a non - reversible way the two half - shells 2 and 3. This means that once the anti - theft device 1 is closed by the above means, is not possible to reopen it if not by breaking said means and making the device 1 unusable for a subsequent application to another pair of eyeglasses. Said closing means B to connect the half - shells 2 and 3 comprise one or more elements that can be coupled together by interference. According to the preferred embodiment of the invention, as shown in Figures 1-5, such closing means B comprise at least one pin P, placed in correspondence with the end B3 of the half - shell 3 and having a frustoconical shape associable with at least one housing A. Said housing A is otherwise placed in correspondence with the end B2 of the other half -shell 2 and provided with a deformable inlet opening that can house the pin P. As shown in Figures 1 and 3a, the deformable inlet opening of housing A comprises at least four elements A1, A2, A3, A4 projecting inward of the housing A. Thus, when the half - shell 2 is approached to the half - shell 3, the pin P is forced into the housing A. The inlet opening of the housing is deformed by the passage of the pin P, i.e. the four elements A1, A2, A3, A4, projecting towards the inside of the housing A, once the pin P is forced into the housing, prevent any reverse movement of translation.

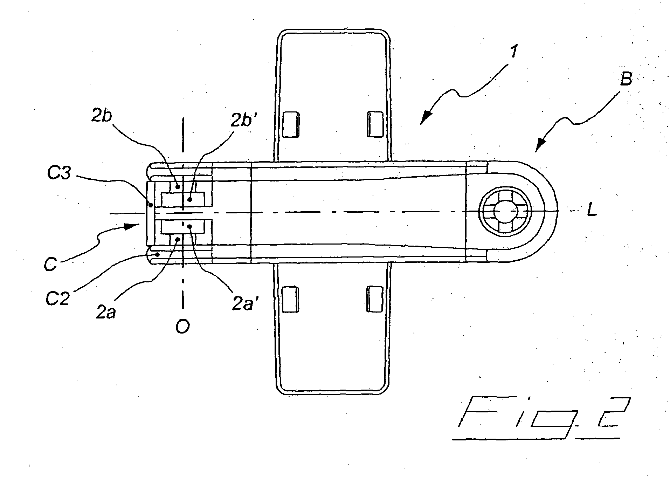

As mentioned earlier, one of the disadvantages of anti - theft devices according to the known art is to present on the opposite side of the closing means, an hinge without any anti - tampering system. According to the present invention, however, the anti - theft device 1 has a tamper proof hinge C, as shown in Figure 2 and Figures 3a and 3b.

Said tamper proof security hinge comprises at least two male elements 2a and 2b, provided with two heads 2a' and 2b', located at the end C2 of the primary half - shell 2 as shown in figure 3a and at least two female housings or grooves 3a' and 3b' at the end C3 of the secondary half - shell 3 as shown in Figure 3b. The presence of said heads 2a' and 2b' impedes the possible extraction of the male elements from their seats because heads 2a' and 2b' are locked within the grooves 3a' and 3b'.

The two male elements 2a and 2b with the respective heads 2a' and 2b' form a single piece with said second primary half-shell 2, while the two female housings or grooves 3a' 3b' form a single piece with said secondary half-shell 3.

Therefore, the primary half - shell 2 and the secondary half - shell 3 are rotatably connected by inserting the heads 2a' and 2b' of the male elements 2a and 2b of said primary half - shell in said female housings or grooves 3a' and 3b' of said secondary half - shell 3.

In this way the heads 2a' and 2b' of the male elements 2a and 2b, inserted in said grooves 3a' and 3b', not only allow the rotation of the primary half - shell 2 with respect to the secondary half -shell 3 around said axis O, but also prevent the male elements 2a and 2b from moving along said axis O, as the heads 2a' and 2b' are inserted in said grooves 3a' and 3b'.

This particular configuration allows having a hinge C that in addition to ensuring the rotation of the two half - shells provides a tamper proof security system. As a matter of fact, possible attempts to separate the two half - shells 2 and 3 from the side of the hinge C would be prevented by the presence of said heads 2a' and 2b' that, being housed in the grooves 3a' and 3b', allow the rotation of the male elements 2a and 2b, and likewise the rotation of the half - shell 2, but at the same time prevent said male elements from being extracted from their seat moving along the orthogonal axis O. When the device is in the closed position, the temple arm of the eyeglasses (not shown) will be in contact with the central part of the inner half - shells 2 and 3, i.e. in contact with those internal surfaces that, after a rotation of the half - shells 2 and 3 around the axis O of the hinge C, are then facing each other. When in use, therefore, the anti - theft device 1 is closed upon the temple arm of the eyeglasses (not shown). This operation can be done manually or through the use of a suitable tool (not shown). The closing operation of the device 1 is made by approaching the two half - shells 2 and 3 to the temple arm so that it lies between the two half - shells 2 and 3, and likewise between the hinge C and the closing means B. The two half - shells 2 and 3 are rotated around the axis O of the hinge C so that the inner faces of the two half - shells are separately lead to contact the temple arm (not shown). Subsequently when the anti - theft device 1 is completely closed on the eyeglass temple arm the pin P is inserted into the relative housing A to block and prevent any sliding of the anti - theft device 1 along the temple arm. Therefore, in the absence of the opening tool of the closure B, the anti - theft device 1 cannot be removed from the eyeglasses.

In other embodiments of the anti - theft device 1 not represented here, the eyeglass temple arm can be kept tightly closed between two elements made out of flexible material placed within the inner side of the half - shells without the possibility of being scratched due to excessive pressure upon the temple arm during the movement of the device.

Advantageously the half - shells of the anti - theft device can be conformed according to the size and type of section, for example circular or oval, of the elongated element of the objects on display for retail and around which said half - shells are to be tightly closed. Such is the case for example of golf club shafts or support element for retail items in a display stand.

Advantageously the device according to the invention is used as an anti - theft device for retail items or for display, such as sunglasses, eyeglasses and sport - glasses, golf-clubs, support shafts for retail items on display and for sale.

Moreover the anti - theft device 1 can be provided with plates on which bar codes can be applied or other signaling systems adapt at being electronically detected, that can be directly positioned on additional seats provided for example outside the half - shells 2 and 3, so to enhance the anti -theft functions of the device.

Additionally it should be added that the anti - theft device 1 may have a variable size depending on the type of eyeglasses and/or temple arm to which it is destined without going beyond the protected scope of this patent.

Finally, it can be observed that the simple form of the two half - shells 2 and 3 provided respectively at the ends C2 and C3 with male elements 2a and 2b and female elements 3a' and 3b' still permits the making of the device by way of a quick and easy molding method. The half - shells 2 and 3, substantially of an arched profile and preferably made from a single mold, are made of a plastic material such as polycarbonate, glass filled nylon.

## Claims

1. Anti - theft device (1) comprising at least two rigid half - shells, a primary one (2) and a secondary one (3), that can be tighten around an elongated element having any section and provided, at one end (C2, C3) with rotating means and with closing means (B) at the opposite end (B1, B2), **characterized in that** said rotating means comprise a security tamper proof hinge (C), said tamper proof security hinge comprising at least two male elements (2a, 2b), provided with respective heads (2a', 2b'), at the end (C2) of the primary half - shell (2) and at least two corresponding female housings or grooves (3a', 3b') at the end (C3) of the secondary half - shell (3) for receiving said heads (2a', 2b') of said male elements (2a, 2b).

2. Anti - theft device (1) according to claim 1, **characterized in that** said two rigid half-shells (2, 3) are shaped to be tightened around a eyeglass temple arm and that said closing means belong to the non - reversible type.

3. Anti - theft device (1) according to claim 1, **characterized in that** said at least two male elements (2a, 2b) form a single piece with said primary half - shell (2) and that said at least two female housings or grooves (3a', 3b') form a single piece with said secondary half - shell (3).

4. Anti - theft device (1) according to any one of the preceding claims, **characterized in that** said male elements (2a, 2b) of said primary half - shell (2) are rotatably connectable with said female housings or grooves (3a', 3b') of said secondary half - shell (3) by the heads (2a', 2b') of said male elements (2a, 2b).

5. Anti - theft device (1) according to any one of the preceding claims, **characterized in that** said hinge (C) allows the end (C2) of the primary half - shell (2) to rotate relatively to the end (C3) of the secondary half - shell (3) around an axis (O) orthogonal to a second axis (L) oriented with the longitudinal direction of the half - shells (2, 3).

6. Anti - theft device (1) according to any one of the claims from 1 to 5, **characterized in that** said heads (2a', 2b') of said male elements (2a, 2b), rotatably inserted into said grooves (3a', 3b') around said orthogonal axis (O), cannot move along said orthogonal axis (O).

7. Anti - theft device (1) according to any one of the preceding claims from 1 to 6, **characterized in that** said half - shells (2, 3) have an arched profile.

8. Anti - theft device (1) according to any one of the preceding claims from 1 to 6, **characterized in that** said half - shells (2, 3) are composed of plastic material, such as polycarbonate, filled glass nylon.

9. Use of the tamper proof hinge of the claims from 1 to 6 for increasing the anti - theft device security.

10. Use of the device of the claims from 1 to 8 as anti - theft for items for sale and exhibition.

## Patentansprüche

1. Diebstahlschutzeinrichtung (1) umfassend mindestens zwei starre Halbschalen, eine primäre (2) und eine sekundäre (3), die um ein langgestrecktes Element mit einem beliebigen Querschnitt herum gespannt werden können, und die an einem Ende (C2, C3) mit einer Dreheinrichtung und an dem gegenüberliegenden Ende (B1, B2) mit Schließmitteln (B) ausgestattet sind, **dadurch gekennzeichnet, dass** die Dreheinrichtung ein manipulationssicheres Sicherheits-Drehgelenk (C) aufweist, wobei das manipulationssichere Sicherheits-Drehgelenk mindestens zwei mit entsprechenden Köpfen (2a', 2b') ausgestattete männliche Elemente (2a, 2b) an dem Ende (C2) der primären Halbschale (2) und mindestens zwei entsprechende Buchsen oder Nuten (3a', 3b') an dem Ende (C3) der sekundären Halbschale (3), zum Aufnehmen der Köpfe (2a', 2b') der männlichen Elemente (2a, 2b), aufweist.

2. Diebstahlschutzeinrichtung (1) gemäß Anspruch 1, **dadurch gekennzeichnet, dass** die zwei starren Halbschalen (2, 3) so geformt sind, dass sie um einen Brillenbügel herum gespannt werden können, und dass die Schließmittel von der nichtreversiblen Bauart sind.

3. Diebstahlschutzeinrichtung (1) gemäß Anspruch 1, **dadurch gekennzeichnet, dass** die mindestens zwei männlichen Elemente (2a, 2b) einstückig mit der primären Halbschale (2) ausgebildet sind und dass die mindestens zwei Buchsen oder Nuten (3a', 3b') einstückig mit der sekundären Halbschale (3) ausgebildet sind.

4. Diebstahlschutzeinrichtung (1) gemäß irgendeinem der vorherigen Ansprüche, **dadurch gekennzeichnet, dass** die männlichen Elemente (2a, 2b) der primären Halbschale (2) mit den Buchsen oder Nuten (3a', 3b') der sekundären Halbschale (3) mittels der Köpfe (2a', 2b') der männlichen Elemente (2a, 2b) drehbar verbindbar sind.

5. Diebstahlschutzeinrichtung (1) gemäß irgendeinem der vorherigen Ansprüche, **dadurch gekennzeichnet, dass** das Scharnier (C) dem Ende (C2) der primären Halbschale (2) erlaubt, sich relativ zu dem Ende (C3) der sekundären Halbschale (3) um eine Achse (O) zu drehen, die rechtwinkelig zu einer zweiten Achse (L) steht, die in Längsrichtung der Halbschalen (2, 3) verläuft.

6. Diebstahlschutzeinrichtung (1) gemäß irgendeinem der Ansprüche 1 bis 5, **dadurch gekennzeichnet, dass** die Köpfe (2a', 2b') der männlichen Elemente (2a, 2b), die in die Nuten (3a', 3b') um die rechtwinkelige Achse (O) drehbar eingesetzt sind, nicht entlang der rechtwinkligen Achse (O) verschiebbar sind.

7. Diebstahlschutzeinrichtung (1) gemäß irgend einem der vorherigen Ansprüche 1 bis 6, **dadurch gekennzeichnet, dass** die Halbschalen (2, 3) ein bogenförmiges Profil aufweisen.

8. Diebstahlschutzeinrichtung (1) gemäß irgendeinem der vorherigen Ansprüche von 1 bis 6, **dadurch gekennzeichnet, dass** die Halbschalen (2, 3) aus Kunststoffmaterial, wie Polycarbonat, glasfaserverstärktes Nylon gefertigt sind.

9. Verwendung des manipulationssicheren Drehgelenkes gemäß den Ansprüchen 1 bis 6 zur Erhöhung der Sicherheit von Diebstahlschutzeinrichtungen.

10. Verwendung der Vorrichtung gemäß den Ansprüchen 1 bis 8 als Diebstahlschutz für Gegenstände im Verkauf und bei der Ausstellung.

## Revendications

1. Dispositif antivol (1) comprenant au moins deux demi-coques rigides, l'une primaire (2) et l'une secondaire (3), qui peuvent être resserrées autour d'un élément allongé ayant une section quelconque et dotées, au niveau d'une extrémité (C2, C3), de moyens de rotation et de moyens de fermeture (B) au niveau de l'extrémité opposée (B1, B2), **caractérisé en ce que** lesdits moyens de rotation comprennent une charnière inviolable de sécurité (C), ladite charnière inviolable de sécurité comprenant au moins deux éléments mâles (2a, 2b), dotés de têtes respectives (2a', 2b'), au niveau de l'extrémité (C2) de la première demi-coque (C2) et au moins deux logements ou rainures femelles (3a', 3b') correspondants au niveau de l'extrémité (C3) de la demi-coque secondaire (3) afin de recevoir lesdites têtes (2a', 2b') desdits éléments mâles (2a, 2b).

2. Dispositif antivol (1) selon la revendication 1, **caractérisé en ce que** lesdites deux demi-coques rigides (2, 3) sont dimensionnées pour être resserrées autour d'une branche de lunettes et **en ce que** lesdits moyens de fermeture sont du type non réversible.

3. Dispositif antivol (1) selon la revendication 1, **caractérisé en ce que** lesdits au moins deux éléments mâles (2a, 2b) forment une pièce unique avec ladite demi-coque primaire (2) et **en ce que** lesdits au moins deux logements ou rainures femelles (3a', 3b') forment une pièce unique avec ladite demi-coque secondaire (3).

4. Dispositif antivol (1) selon l'une quelconque des revendications précédentes, **caractérisé en ce que** lesdits éléments mâles (2a, 2b) de ladite demi-coque primaire (2) peuvent être raccordés avec faculté de rotation avec lesdites rainures ou logements femelles (3a', 3b') de ladite demi-coque secondaire (3) par les têtes (2a', 2b') desdits éléments mâles (2a, 2b).

5. Dispositif antivol (1) selon l'une quelconque des revendications précédentes, **caractérisé en ce que** ladite charnière (C) permet à l'extrémité (C2) de la demi-coque primaire (2) de tourner par rapport à l'extrémité (C3) de la demi-coque secondaire (3) autour d'un axe (0) orthogonal à un second axe (L) orienté avec la direction longitudinale des demi-coques (2, 3).

6. Dispositif antivol (1) selon l'une quelconque des revendications 1 à 5, **caractérisé en ce que** lesdites têtes (2a', 2b') desdits éléments mâles (2a, 2b) insérés avec faculté de rotation dans lesdites rainures (3a', 3b') autour dudit axe orthogonal (0), ne peuvent pas se déplacer le long dudit axe orthogonal (O).

7. Dispositif antivol (1) selon l'une quelconque des revendications 1 à 6 précédentes, **caractérisé en ce que** lesdites demi-coques (2, 3) ont un profil arqué.

8. Dispositif antivol (1) selon l'une quelconque des revendications 1 à 6 précédentes, **caractérisé en ce que** lesdites demi-coques (2, 3) sont composées d'un matériau plastique, tel que le poly(carbonate), le nylon armé de verre.

9. Utilisation d'une charnière inviolable des revendications 1 à 6, pour améliorer la sécurité du dispositif antivol.

10. Utilisation du dispositif des revendications 1 à 8 comme antivol pour des articles à vendre et à exposer.
